# EUROPEAN PATENT SPECIFICATION

(11) **EP 4 473 304 B1**
(45) Date of publication and mention of the grant of the patent: **12.08.2026**
(21) Application number: 23709501.3
(22) Date of filing: 01.02.2023
(51) Int. Cl.: G01N 30/86

(54) **PEAK DECONVOLUTION FOR CHROMATOGRAPHIC TIME-SERIES COMPOSITE SIGNALS**
PEAKENTFALTUNG FÜR CHROMATOGRAPHISCHE ZEITREIHEN-VERBUNDSIGNALE
DÉCONVOLUTION DE PIC DE SIGNAUX CHROMATOGRAPHIQUES COMPOSITES EN SÉRIE CHRONOLOGIQUE

(30) Priority: 01.02.2022 US 202263305516 P
(43) Date of publication of application: 11.12.2024
(73) Proprietor: GENENTECH, INC., South San Francisco, CA 94080 (US)
(72) Inventor: BURGESS, Sean Mackenzie, San Francisco, CA 94080-4990 (US); MAIER, Andrew James, San Francisco, CA 94080-4990 (US)
(74) Representative: Küng, Peter
(86) International application number: PCT/US2023/012121
(87) International publication number: WO 2023/150167

(56) References cited:
- US-A- 4 807 148
- JELLEMA R H ET AL: "Deconvolution using signal segmentation", CHEMOMETRICS AND INTELLIGENT LABORATORY SYSTEMS, ELSEVIER SCIENCE PUBLISHERS B.V. AMSTERDAM, NL, vol. 104, no. 1, 15 November 2010 (2010-11-15), pages 132 - 139, XP027424691, ISSN: 0169-7439, [retrieved on 20100727], DOI: 10.1016/J.CHEMOLAB.2010.07.007
- PETERS SONJA ET AL: "A new method for the automated selection of the number of components for deconvolving overlapping chromatographic peaks", ANALYTICA CHIMICA ACTA, ELSEVIER, AMSTERDAM, NL, vol. 799, 31 August 2013 (2013-08-31), pages 29 - 35, XP028739739, ISSN: 0003-2670, DOI: 10.1016/J.ACA.2013.08.041
- PÉREZ-BAEZA M ET AL: "Modified Gaussian models applied to the description and deconvolution of peaks in chiral liquid chromatography", JOURNAL OF CHROMATOGRAPHY A, ELSEVIER, AMSTERDAM, NL, vol. 1625, 29 May 2020 (2020-05-29), XP086222454, ISSN: 0021-9673, [retrieved on 20200529], DOI: 10.1016/J.CHROMA.2020.461273

## Description

### CROSS-REFERENCE TO RELATED APPLICATIONS

This application claims priority to U.S. Provisional Patent Application Serial No. 63/305,516 filed February 1, 2022.

### FIELD OF THE INVENTION

The present disclosure is directed to systems and methods for accessing and analyzing a chromatographic time-series composite signals comprising multiple signal distributions and deconvoluting the signal distributions to correlate such deconvoluted signals with chemical constituents in a variety of sample types, e.g., biopharmaceutical purification process samples.

### INTRODUCTION

Due to the rapid advancement in cell biology and immunology, there has been an increasing demand to develop novel therapeutic recombinant proteins for a variety of diseases including cancer, cardiovascular diseases, and metabolic diseases. These biopharmaceuticals are commonly manufactured by commercial cell lines capable of expressing the products of interest. For example, Chinese hamster ovary (CHO) cells have been widely adapted to produce monoclonal antibodies.

The use of cell lines to express biopharmaceuticals has necessitated the development of robust purification processes to facilitate the separation and isolation of the biopharmaceuticals from the cells, cell debris, and culture media, as well as undesirable variants of the biopharmaceuticals themselves. Typically, a sample of interest, e.g., a sample of purified or partially purified biopharmaceutical, will be composed of multiple chemical constituents, and the aim of any assay employed to assess the purity of the sample will be to determine the amount of each constituent in the sample. Such determinations are often represented as compositional data with the relative abundance of each chemical constituent as a percentage. In order to quantify the number or chemical constituents and their relative abundance accurately, most assays aim to detect chemical constituents separately either by physical separation of the chemical constituents (as is the case with chromatography) or physical separation of a signal from different chemical constituents (as is the case with spectroscopy). However, identifying the number of chemical constituents and their relative abundance when analytical techniques have poor resolution can involve subjective assumptions about the number of chemical constituents present and risks systematic errors. For example, one analyst can assume that a chromatography peak is composed of three chemical constituents, whereas another can identify four. Additionally, the judgment of analysts concerning the start and end peak integration positions can differ. Finally, when large overlap, or convolution, exists among the signals of different chemical constituents, it can be difficult or impossible to accurately determine relative areas through conventional methods (e.g. vertical-line integration, tangential integration, iterative peak fitting, etc.). Accordingly, a technique capable of robustly deconvoluting the signal from poorly resolved chromatographic time-series signals, which would allow for improved identification and quantification of the constituents of a sample, would save significant time and improve the accuracy and robustness of current strategies.

### SUMMARY OF PARTICULAR EMBODIMENTS

Herein are provided systems and methods for accessing and analyzing a chromatographic time-series composite signals comprising multiple signal distributions and deconvoluting the signal distributions to correlate such deconvoluted signals with chemical constituents in a variety of sample types, e.g., biopharmaceutical purification process samples. The scope of the invention is defined in the appended claims.

To effectively deconvolute peaks in a chromatographic time-series composite signal, certain signal processing systems disclosed herein can use a mathematically and statistically robust method to interpret the signal to determine the number of chemical constituents, their elution times, and their relative abundance. In contrast to conventional methods, which attempt to deconvolute the raw signal, the signal processing systems disclosed herein can, in certain embodiments, instead convert the signal into a count distribution. Additionally, the signal processing systems disclosed herein can, in certain embodiments, use the Dirichlet process algorithm or any related suitable algorithm. This feature can allow for a mathematically and statistically robust, consistent, and objective method to deconvolute and integrate overlapping chromatographic peaks without the intervention/assumptions of a subject matter expert. Being able to deconvolute peaks with large overlap can allow for much faster development of analytical assays, or in some cases, use of standard assays that would normally be unsuitable due to peak overlap. One limitation for chromatographic assays (e.g., high-performance liquid chromatography) is that increased flow rates (accelerating assays) often results in decreased chromatographic resolution, preventing the user from accurately determining the number of chemical constituents and their components. The ability to accurately identify and quantify the chemical constituents in accelerated assays can expand the scope of applications where chromatographic assays might be useful. As an example and not by way of limitation, a faster chromatographic assay can be employed in-line or on-line in a benchtop or production-scale bioreactor or chromatography skid in order to monitor and/or control bioprocessing in real time. Knowing the true relative abundance of chemical constituents (e.g., product variants and process impurities) can also provide more accurate process knowledge and result in improvement when developing mechanistic models. Although this disclosure describes processing particular signals by particular systems in a particular manner, this disclosure contemplates processing any suitable signal by any suitable system in any suitable manner.

The signal processing systems disclosed herein can access a chromatographic time-series composite signal comprising a plurality of signal distributions. The chromatographic time-series composite signal can be associated with a two-dimensional (2D) array. In particular embodiments, a first dimension of the 2D array can comprise a plurality of indexes and a second dimension of the 2D array can comprise a plurality of response values corresponding to the plurality of indexes, respectively. The signal processing system can then select a plurality of candidate index-response pairs from the 2D array. The signal processing system can further convert the chromatographic time-series composite signal into a one-dimensional (1D) array. In particular embodiments, the converting can comprise the following steps. For each of the plurality of candidate index-response pairs, the signal processing system can generate an array-segment comprising one or more array-elements. A number of the one or more array-elements can be determined based on the response value of the candidate index-response pair. The one or more array-elements can be generated by unpacking the candidate index-response pair based on array deconstruction. The signal processing system can then concatenate the plurality of array-segments corresponding to the plurality of candidate index-response pairs to generate the 1D array. The signal processing system can then process the 1D array with a probability distribution realization algorithm to determine one or more of a mean, a standard deviation, a relative area for each of the plurality of signal distributions, an exponential decay component parameter, or any parameter defining each of the plurality of signal distributions. The signal processing system can then individually identify each of the plurality of signal distributions based on one or more of the mean, the standard deviation, the relative area for each of the plurality of signal distributions, the exponential decay component parameter, or any parameter defining each of the plurality of signal distributions. In particular embodiments, the signal processing system can further correlate each identified signal distribution with a chemical constituent.

The signal processing system can generate a one-dimensional (1D) array comprising array-elements. Each array-element can embody a plurality of signal distributions corresponding to a plurality of chemical constituents. The signal processing system can process the 1D array with a probability distribution realization algorithm to determine one or more of a mean, a standard deviation, a relative area for each of the plurality of signal distributions, an exponential decay component parameter, or any parameter defining each of the plurality of signal distributions. The signal processing system can further identify at least one signal distribution that corresponds to a chemical constituent from the plurality of signal distributions corresponding to the plurality of chemical constituents.

### BRIEF DESCRIPTION OF THE DRAWINGS

FIG. 1 illustrates an example chromatograph time-series composite signal.
FIG. 2 illustrates an example workflow of data conversion for the probability distribution realization algorithm.
FIG. 3 illustrates an example method for peak deconvolution.
FIG. 4 illustrates an example method for identifying a signal distribution.
FIG. 5 illustrates an example of a computing system.

### DESCRIPTION

In particular embodiments, the signal processing systems disclosed herein can access a chromatographic time-series composite signal comprising a plurality of signal distributions. Each signal distribution can correspond to a chemical constituent. In particular embodiments, each signal distribution can be any suitable probability distribution function. As an example and not by way of limitation, each signal distribution can be a gaussian distribution or an exponentially modified gaussian distribution. Two or more of the plurality of signal distributions can be convoluted. In particular embodiments, the chromatographic time-series composite signal can be associated with a two-dimensional (2D) array. A first dimension of the 2D array can comprise a plurality of indexes and a second dimension of the 2D array can comprise a plurality of response values corresponding to the plurality of indexes, respectively. In particular embodiments, the signal processing system can select a plurality of candidate index-response pairs from the 2D array. Each candidate index-response pair can comprise an index from the plurality of indexes and its corresponding response value from the plurality of response values. The signal processing system can then select a time range for converting the chromatographic time-series composite signal into a one-dimensional (1D) array. In particular embodiments, the signal processing system can remove a baseline drift associated with the chromatograph time-series composite signal. The signal processing system can then determine one or more binning parameters associated with a plurality of virtual bins used for converting the chromatographic time-series composite signal into the 1D array. As an example and not by way of limitation, the one or more binning parameters can comprise one or more of a number of the plurality of virtual bins determined based on a signal distribution of the chromatograph time-series composite signal, a location for each virtual bin determined based on the number of the virtual bins, a reference height for each virtual bin that is proportional to a sum signal in a range associated with that virtual bin, or a width for each virtual bin determined based on the number of the virtual bins. The signal processing system can also generate a scaled response value for the response value of each of the plurality of index-response pairs by multiplying the response value with a scaling factor. In particular embodiments, the signal processing system can further convert the chromatographic time-series composite signal into a one-dimensional (1D) array. The converting can comprise the following steps. For each of the plurality of candidate index-response pairs, the signal processing system can firstly identify a corresponding virtual bin from the plurality of virtual bins for the candidate index-response pair. The identified virtual bin can be associated with an index-range. The signal processing system can secondly generate an array-segment comprising one or more array-elements. A number of the one or more array-elements can be determined based on the response value of the candidate index-response pair. The one or more array-elements can be generated by unpacking the candidate index-response pair based on array deconstruction. Element-values of the one or more array-elements can be determined based on the index-range. The signal processing system can thirdly distribute the one or more array-elements into the identified virtual bin based on a quasi-random low discrepancy sequence. In particular embodiments, the signal processing system can concatenate the plurality of array-segments corresponding to the plurality of candidate index-response pairs to generate the 1D array. The signal processing system can then process the 1D array with a probability distribution realization algorithm to determine one or more of a mean, a standard deviation, a relative area for each of the plurality of signal distributions, an exponential decay component parameter, or any parameter defining each of the plurality of signal distributions. As an example and not by way of limitation, the probability distribution realization algorithm can be based on a Dirichlet process. In particular embodiments, the signal processing system can determine a number of the plurality of signal distributions in the chromatographic time-series composite signal based on maximizing a likelihood function associated with the probability distribution realization algorithm. The signal processing system can then individually identify each of the plurality of signal distributions based on one or more of the mean, the standard deviation, the relative area for each of the plurality of signal distributions, the exponential decay component parameter, or any parameter defining each of the plurality of signal distributions. In particular embodiments, the signal processing system can further correlate each identified signal distribution with a chemical constituent. Although this disclosure describes processing particular signals by particular systems in a particular manner, this disclosure contemplates processing any suitable signal by any suitable system in any suitable manner.

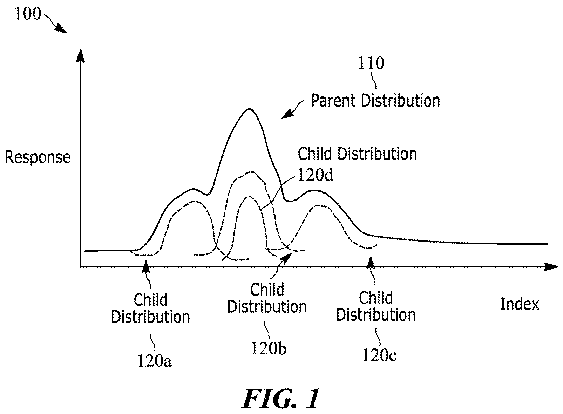

**FIG. 1** illustrates an example chromatograph time-series composite signal 100. A chromatograph time-series composite signal 100 can refer to a signal that has multiple peaks overlapping with each other. The chromatograph time-series composite signal 100 can have a parent distribution 110. In particular embodiments, the chromatograph time-series composite signal 100 can comprise a mixture model comprising a plurality of probability distributions. Each probability distribution can correspond to a chemical constituent. The chemical constituent can refer to a composition of matter that we want to identify from the chromatograph time-series composite signal 100. As an example and not by way of limitation, the mixture model can comprise a gaussian mixture model and each of the probability distributions can comprise a gaussian distribution or an exponentially modified gaussian distribution. The chromatograph time-series composite signal 100 can be a result of multiple chromatogram signals corresponding to different chemical constituents convoluting with each other. In other words, two or more of the plurality of signal distributions can be convoluted, i.e., there are peaks overlapping with each other. As an example and not by way of limitation, there can be four chromatogram signals corresponding to four chemical constituents in FIG. 1. Each of them can have a respective child signal distribution 120, i.e., child distribution 120a, child distribution 120b, child distribution 120c, and child distribution 120d. The signal distribution can refer to the distribution of a signal that corresponds to a chemical constituent. These signals can have overlap or convolution between them. In FIG. 1, the peaks of child distributions 120a-c for their corresponding signals can be still identifiable, which can be relatively easy for one to deconvolute them. However, more often, the overlap can be much larger. For example, the peaks of two signals can be overlapping for over 50%. As another much more difficult scenario, one peak of a signal can be completely under another peak of another signal, e.g., child distribution 120d can be completely within child distribution 120b. When such large overlap or convolution exists between the signals of different chemical constituents, it can be difficult or impossible to accurately determine the individual relative area through conventional methods (e.g. vertical-line integration, tangential integration, iterative peak fitting, etc.). Furthermore, oftentimes, the number of the chemical constituents can be unknown, which makes it even more challenging to individually identify each signal distribution. Although this disclosure describes particular chromatogram signals in a particular manner, this disclosure contemplates processing any suitable chromatogram signal in any suitable manner.

In particular embodiments, to effectively deconvolute a chromatographic time-series composite signal 100 comprising overlapping or convoluted signals corresponding to different chemical constituents as exemplified in FIG. 1, the signal processing system can process and analyze the composite signal as follows. Sometimes, there can be a drift in the chromatographic time-series composite signal 100. The drift can be the low-frequency signal variation that occurs in the baseline of the chromatographic time-series composite signal 100. As an example and not by way of limitation, if the process were run with nothing injected, one can see a line with a negative or positive slope. In order to properly process the chromatographic time-series composite signal 100, the increase or decrease can need to be removed. As such, the signal processing system can remove a baseline drift associated with the chromatographic time-series composite signal 100. In particular embodiments, the signal processing system can use a baseline removal algorithm to remove the baseline drift. As an example and not by way of limitation, the signal processing system can use an open source baseline removal library associated with a chromatogram processing software.

In particular embodiments, the signal processing system can convert the chromatographic time-series composite signal 100 into a 1D array. The chromatographic time-series composite signal 100 can be composed of thousands of data points, which can be represented by a 2D array. The 2D array can be considered as a representation of the chromatographic time-series composite signal 100. The first dimension of the 2D array can comprise indexes and the second dimension of the 2D array can comprise response values corresponding to the indexes, respectively. That is, each data point can be associated with an index and a corresponding response value, e.g. (1,1), (2,5), (3,20), etc., where the first dimension corresponds to the index (e.g., time) and the second dimension corresponds to the response value. As each data point of the chromatographic time-series composite signal 100 has an index and a corresponding response value, the whole chromatograph time-series composite can be represented as a 2D array such as [(0.5,1),(1,2),(1,5)...]. In particular embodiments, the signal processing system can select a plurality of candidate index-response pairs from the 2D array. This can be because the chromatographic time-series composite signal 100 is a continuous signal which means we can have indefinite number of data points. We can need to select some of them to distribute them into virtual bins. As an example and not by way of limitation, for time from 0 to 5, we can select the data points at 1, 2, 3, 4, 5. For each selected data point, it can have the form [time, response] defined as a candidate index-response pair. As another example and not by way of limitation, the indexes for these candidate index-response pairs can be 1, 2, ...,1000 with a difference of 1 between any two adjacent indexes.

In particular embodiments, the probability distribution realization algorithm (e.g., the Dirichlet process algorithm) can operate with just positional (i.e., index) data, and the response value need not directly be used. To solve this problem, the signal processing system can first convert each response value into data points with just the counts. As an example and not by way of limitation, (1,1) can be converted to [1] and (2, 5) can be converted to [2, 2, 2, 2, 2]. However, the data points cannot be left in this form, as it would introduce spikes of data, making it improbable to develop a reasonable distribution. To solve this issue, the signal processing system can distribute the data points into virtual bins as outlined below.

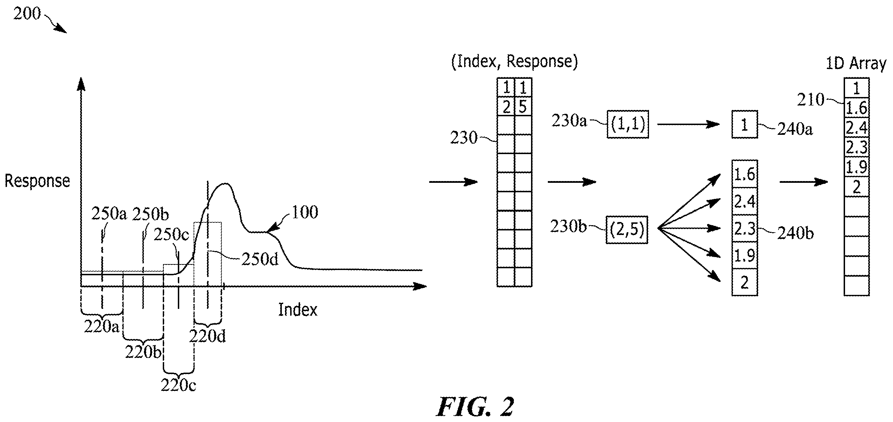

**FIG. 2** illustrates an example workflow 200 of data conversion for the probability distribution realization algorithm. In particular embodiments, a 1D array 210 can be derived from a two-dimensional (2D) array and an element-value of each array-element in the 1D array can be derived from one of the plurality of response values in the 2D array. In particular embodiments, the signal processing system can select a time range for converting the chromatographic time-series composite signal 100 into the 1D array 210. As an example and not by way of limitation, the time range can be from 0 to 1000 seconds. As another example and not by way of limitation, the time range can be from 10 seconds to 100 seconds. In particular embodiments, the selected time range can cover over a threshold percentage (e.g., 95%) of the chromatographic time-series composite signal 100. The signal processing system can then determine one or more binning parameters associated with a plurality of virtual bins (e.g., virtual bins 220a-220d in FIG. 2) used for converting the chromatographic time-series composite signal 100 into the 1D array 210. The virtual bin 220 can refer to where the data points are distributed. In particular embodiments, the one or more binning parameters can comprise one or more of a number of the plurality of virtual bins 220 determined based on a signal distribution of the chromatographic time-series composite signal 100, a location for each virtual bin 220 determined based on the number of the virtual bins 220, a reference height for each virtual bin 220 that is proportional to a sum signal in a range associated with that virtual bin 220, or a width for each virtual bin 220 determined based on the number of the virtual bins 220. Although this disclosure describes particular data point distribution and particular virtual bins (e.g., flat bins), this disclosure contemplates any suitable data point distribution and virtual bins (e.g., non-flat or sloped). In particular embodiments, any data point distribution that corresponds to the chromatographic time-series composite signal 100 can be used. The closer the data point distribution to the original chromatographic time-series composite signal 100, the better the result can be. As an example, and not by way of limitation, the data point distribution can be a trapezoidal distribution. Correspondingly, each virtual bin can be a trapezoidal bin that is based on the local slope. As another example and not by way of limitation, the data point distribution can be a random point distribution.

In particular embodiments, the signal processing system may need to define the width for each virtual bin 220 for data distribution. The width for each virtual bin 220 can be determined based on the number of response values of the selected candidate index-response pairs 230, the distances between the indexes of the candidate index-response pairs 230, and the number of virtual bins 220. As an example and not by way of limitation, if there are 100 virtual bins 220 and there are 1000 response values each a second apart (i.e., the time range is 1000 seconds), each virtual bin 220 can have a width of 10 seconds. In particular embodiments, the number of virtual bins 220 can be any suitable number. In particular embodiments, the virtual bins 220 can be of equivalent width. In alternative embodiments, the virtual bins 220 can have different width. In particular embodiments, the signal processing system can improve the speed by determining the width based on the curvature of the chromatographic time-series composite signal 100. As an example and not by way of limitation, the flat portions of the chromatographic time-series composite signal 100 can comprise a few virtual bins 220 whereas the curving portions can comprise many virtual bins 220.

In particular embodiments, the signal processing system can generate a scaled response value for the response value of each of the plurality of index-response pairs of the 2D array by multiplying the response value with a scaling factor. In other words, the signal processing system can scale the number of counts in each virtual bin 220 to provide a useful resolution. If the resolution is too low, changes in the chromatographic time-series composite signal 100 may not be captured. As an example and not by way of limitation, for two index-response pairs (5, 15.8) and (6, 16.4), if the scaling factor is 1, both index-response pairs can be converted to 16 counts at 5 and 16 counts at 6 since counts can only be integer values. However, such conversion can cause some information loss. If the scaling factor is significantly large, the resolution can be remarkably high, but the deconvolution can take much longer time. Particularly, the more data points there are, the longer the deconvolution can take. As an example and not by way of limitation, if the scaling factor is 1 million, the two aforementioned index-response pairs can be converted to 15.8 million counts at 5 and 16.4 million counts at 6. As can be seen, the counts can be well defined, but 30 million data points can be unlikely to converge during the optimization of the probability distribution realization algorithm. In particular embodiments, the signal processing system can use an example scaling factor of 1000. Accordingly, the signal processing system can identify any difference greater than 0.1% (1/1000) in the chromatographic time-series composite signal 100.

In particular embodiments, the signal processing system can identify a corresponding virtual bin 220 from the plurality of virtual bins 220 for each candidate index-response pair 230. The identified virtual bin 220 can be associated with an index-range. The signal processing system can then randomly generate the one or more array-elements comprised in the array-segment. Element-values of the one or more array-elements can be determined based on the index-range and a number of the one or more array-elements can be equivalent to the scaled response value associated with the candidate index-response pair 230. As an example and not by way of limitation, an index-response pair can be (1, 1) 230a, where the first 1 corresponds to the index (e.g., time) and the second 1 corresponds to the scaled response value. The signal processing system can need to distribute this index-response pair 230a to a virtual bin 220 with an index-range [0.5, 1.5]. Therefore, the signal processing system can generate one array-element (counts) with randomly generated element values such as 1, which can be comprised in the array-segment 240a. As another example and not by way of limitation, another index-response pair can be (2, 5) 230b, where 2 corresponds to the index (e.g., time) and 5 corresponds to the scaled response value. The signal processing system can need to distribute this index-response pair 230b to a virtual bin 220 with an index-range [1.5, 2.5]. Therefore, the signal processing system can generate five array-elements (counts) with randomly generated element values such as 1.6, 1.9, 2, 2.3, and 2.4. The signal processing system can further distribute the counts around the central point (e.g., central points 250a-250d in FIG. 2) of each virtual bin 220. Continuing with the previous example, the location of the virtual bin 220 is 2 and the width is 1, the counts can be distributed from 1.5 to 2.5 (i.e., the index-range) around the central point 250 of 2. In particular embodiments, the signal processing system can distribute the one or more generated array-elements into the identified virtual bin 220 based on a quasi-random low discrepancy sequence (e.g., Sobol sequence), which can make sure the array-elements well distributed across the virtual bin 220. Continuing with the previous example of the array-elements 1.6, 1.9, 2, 2.3, and 2.4, the resulting array segment can be [1.6, 2.4, 2.3, 1.9, 2] 240b. In particular embodiments, if a trapezoidal distribution is used as the data point distribution, the signal process system can still use the quasi-random low discrepancy sequence but just with a linear scaling from one side to the other.

In particular embodiments, the signal processing system can perform the aforementioned array-segment generation for each of the plurality of candidate index-response pairs 230 by distributing them to each of the plurality virtual bins 220. The signal processing system can further concatenate the plurality of array-segments 240 corresponding to the plurality of candidate index-response pairs 230 to generate the 1D array 210.

In particular embodiments, the signal processing system can then input the 1D array 210 to a probability distribution realization algorithm. As an example and not by way of limitation, the probability distribution realization algorithm can be based on a Dirichlet process. The Dirichlet process algorithm can be used on Gaussian distributions. The Dirichlet process algorithm can be also used on exponentially modified Gaussian distributions, which can better represent chromatographic signals.

In particular embodiments, the Dirichlet process algorithm may not technically find the number of distributions within a chromatographic time-series composite signal 100. The number of distributions can be infinite, and the sum area of all of them can be 1. Infinite distributions can be not possible on a computer, nor can the output be useful if it were. Instead, the signal processing system can define the maximum number of possible distribution (i.e., corresponding to chemical constituents) that one would expect to see in a feedstock. As an example and not by way of limitation, the maximum number can be set to 10, but it can be totally flexible. If one is certain there are no more than 5 chemical constituents, one can set the maximum number to 5, 15, or any suitable number.

In particular embodiments, the Dirichlet process algorithm can cycle through every array-element of the inputted 1D array 210 and either assign it to an existing distribution or create a new distribution for it. The cycle can be repeated until convergence, i.e., no more changes in the assignment of array-elements. After convergence, the weighting factor that is used to determine if a new distribution is created or not, can be changed in a Monte Carlo manner, and the process can be repeated. This cycle can continue until the weighting factor converges. That is, changes to the weighting factor can no longer improve the fit to the data.

In particular embodiments, the signal processing system can determine a number of the plurality of signal distributions in the chromatographic time-series composite signal 100 based on maximizing a likelihood function associated with the probability distribution realization algorithm. In particular embodiments, a number of the plurality of chemical constituents can be unknown. However, the signal processing system can determine the number of the plurality of chemical constituents based on the determined number of signal distributions, which can be a technical advantage of the embodiments disclosed herein over conventional methods.

Once the algorithm has converged, the signal processing system can identify a number of spectral data points assigned to each of a plurality of signal distributions associated with the plurality of chemical constituents relative to an ensemble of spectral data points. The signal processing system can further determine the relative area associated with each of the plurality of signal distributions based on the identified number of spectral data points assigned to that signal distribution. In particular embodiments, we can also define a cutoff where the "found" distribution can be ignored. As an example and not by way of limitation, the cutoff can be set to 0.1% of the total area if the scaling factor is 1000. If the max number of chemical constituents is set to 5, the end result for the relative area of each chemical constituents can be, e.g., [0.7, 0.29, 0.009, 0.00006, 0.00004]. But since the last two values are below the cutoff, the signal processing system can determine the relative area as [0.7, 0.29, 0.009]. It should be noted that this result no longer adds up to 1, so the relative areas can be rescaled. The new area can be calculated as [0.7, 0.29, 0.009]/sum([0.7, 0.29, 0.009]) = [0.7007, 0.2903, 0.009].

In particular embodiments, along with the relative areas, the algorithm can also provide the mean, the standard deviation, the relative area for each signal distribution, the exponential decay component parameter (e.g., for exponentially modified Gaussian distributions), or any suitable parameter defining each signal distribution. They can also be used to identify each signal distribution.

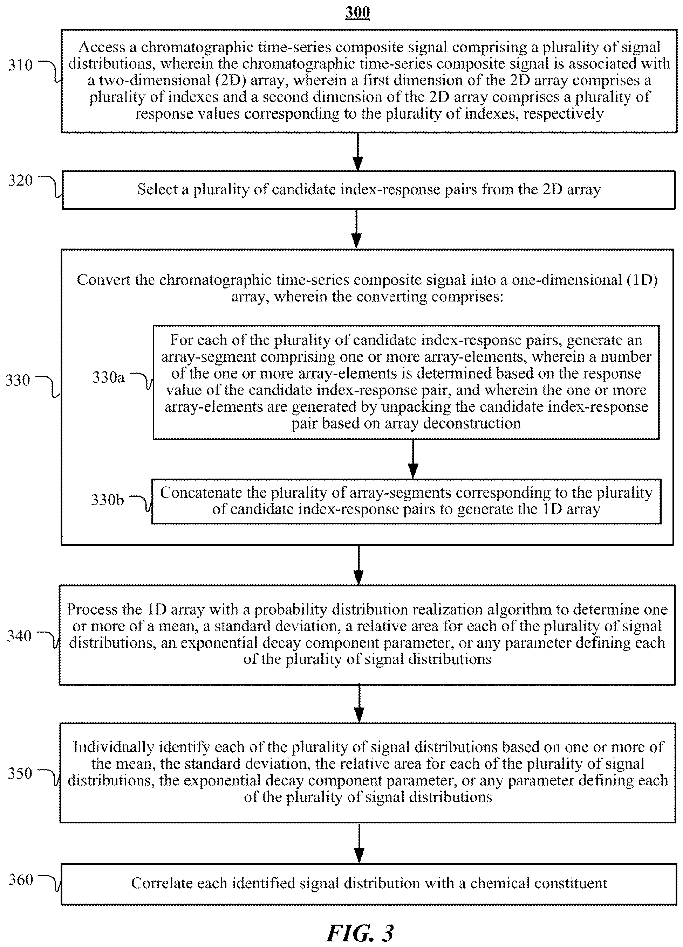

**FIG. 3** illustrates an example method 300 for peak deconvolution of a convoluted chromatogram signal. The method can begin at step 310, where the signal processing system can access a chromatographic time-series composite signal 100 comprising a plurality of signal distributions, wherein the chromatographic time-series composite signal 100 is associated with a two-dimensional (2D) array, wherein a first dimension of the 2D array comprises a plurality of indexes and a second dimension of the 2D array comprises a plurality of response values corresponding to the plurality of indexes, respectively. At step 320, the signal processing system can select a plurality of candidate index-response pairs 230 from the 2D array. At step 330, the signal processing system can convert the chromatographic time-series composite signal 100 into a one-dimensional (1D) array 210. The converting can comprise the following sub-steps. At sub-step 330a, the signal processing system can, for each of the plurality of candidate index-response pairs 230, generate an array-segment 240 comprising one or more array-elements, wherein a number of the one or more array-elements is determined based on the response value of the candidate index-response pair 230, and wherein the one or more array-elements are generated by unpacking the candidate index-response pair 230 based on array deconstruction. At sub-step 330b, the signal processing system can concatenate the plurality of array-segments 240 corresponding to the plurality of candidate index-response pairs 230 to generate the 1D array 210. At step 340, the signal processing system can process the 1D array 210 with a probability distribution realization algorithm to determine one or more of a mean, a standard deviation, a relative area for each of the plurality of signal distributions, an exponential decay component parameter, or any parameter defining each of the plurality of signal distributions. At step 350, the signal processing system can individually identify each of the plurality of signal distributions based on one or more of the mean, the standard deviation, the relative area for each of the plurality of signal distributions, the exponential decay component parameter, or any parameter defining each of the plurality of signal distributions. At step 360, the signal processing system can correlate each identified signal distribution with a chemical constituent. Particular embodiments can repeat one or more steps of the method of FIG. 3, where appropriate. Although this disclosure describes and illustrates particular steps of the method of FIG. 3 as occurring in a particular order, this disclosure contemplates any suitable steps of the method of FIG. 3 occurring in any suitable order. Moreover, although this disclosure describes and illustrates an example method for peak deconvolution of a convoluted chromatogram signal including the particular steps of the method of FIG. 3, this disclosure contemplates any suitable method for peak deconvolution of a convoluted chromatogram signal including any suitable steps, which can include all, some, or none of the steps of the method of FIG. 3, where appropriate. Furthermore, although this disclosure describes and illustrates particular components, devices, or systems carrying out particular steps of the method of FIG. 3, this disclosure contemplates any suitable combination of any suitable components, devices, or systems carrying out any suitable steps of the method of FIG. 3.

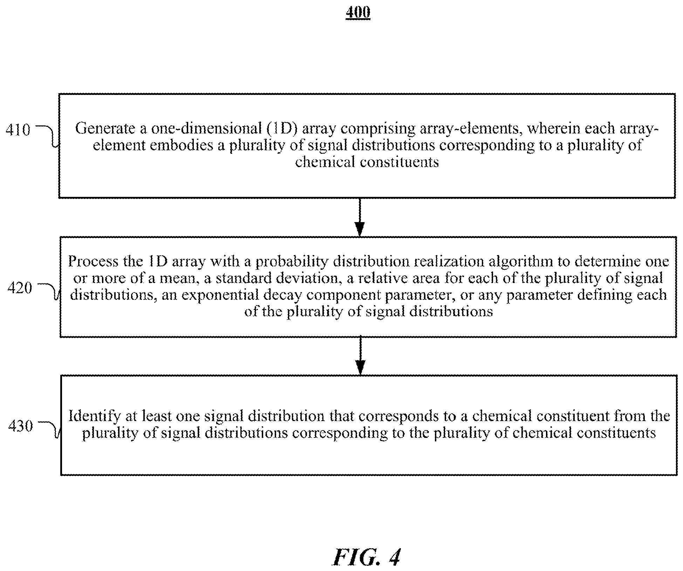

**FIG. 4** illustrates an example method 400 for identifying a signal distribution. The method can begin at step 410, where the signal processing system can generate a one-dimensional (1D) array 210 comprising array-elements, wherein each array-element embodies a plurality of signal distributions corresponding to a plurality of chemical constituents. At step 420, the signal processing system can process the 1D array 210 with a probability distribution realization algorithm to determine one or more of a mean, a standard deviation, a relative area for each of the plurality of signal distributions, an exponential decay component parameter, or any parameter defining each of the plurality of signal distributions. At step 430, the signal processing system can identify at least one signal distribution that corresponds to a chemical constituent from the plurality of signal distributions corresponding to the plurality of chemical constituents. Particular embodiments can repeat one or more steps of the method of FIG. 4, where appropriate. Although this disclosure describes and illustrates particular steps of the method of FIG. 4 as occurring in a particular order, this disclosure contemplates any suitable steps of the method of FIG. 4 occurring in any suitable order. Moreover, although this disclosure describes and illustrates an example method for identifying a signal distribution including the particular steps of the method of FIG. 4, this disclosure contemplates any suitable method for identifying a signal distribution including any suitable steps, which can include all, some, or none of the steps of the method of FIG. 4, where appropriate. Furthermore, although this disclosure describes and illustrates particular components, devices, or systems carrying out particular steps of the method of FIG. 4, this disclosure contemplates any suitable combination of any suitable components, devices, or systems carrying out any suitable steps of the method of FIG. 4.

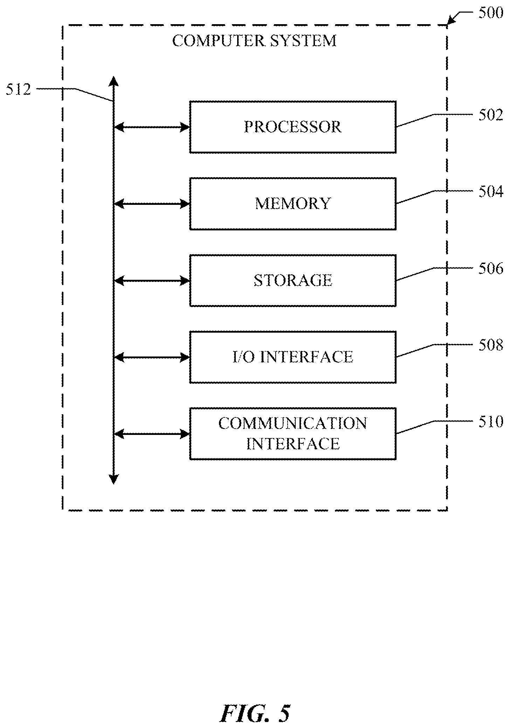

**FIG. 5** illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system can encompass a computing device, and vice versa, where appropriate. Moreover, reference to a computer system can encompass one or more computer systems, where appropriate.

This disclosure contemplates any suitable number of computer systems 500. This disclosure contemplates computer system 500 taking any suitable physical form. As example and not by way of limitation, computer system 500 can be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 500 can include one or more computer systems 500; be unitary or distributed; span multiple locations; span multiple machines; span multiple data centers; or reside in a cloud, which can include one or more cloud components in one or more networks. Where appropriate, one or more computer systems 500 can perform without substantial spatial or temporal limitation one or more steps of one or more methods described or illustrated herein. As an example and not by way of limitation, one or more computer systems 500 can perform in real time or in batch mode one or more steps of one or more methods described or illustrated herein. One or more computer systems 500 can perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 can retrieve (or fetch) the instructions from an internal register, an internal cache, memory 504, or storage 506; decode and execute them; and then write one or more results to an internal register, an internal cache, memory 504, or storage 506. In particular embodiments, processor 502 can include one or more internal caches for data, instructions, or addresses. This disclosure contemplates processor 502 including any suitable number of any suitable internal caches, where appropriate. As an example and not by way of limitation, processor 502 can include one or more instruction caches, one or more data caches, and one or more translation lookaside buffers (TLBs). Instructions in the instruction caches can be copies of instructions in memory 504 or storage 506, and the instruction caches can speed up retrieval of those instructions by processor 502. Data in the data caches can be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches can speed up read or write operations by processor 502. The TLBs can speed up virtual-address translation for processor 502. In particular embodiments, processor 502 can include one or more internal registers for data, instructions, or addresses. This disclosure contemplates processor 502 including any suitable number of any suitable internal registers, where appropriate. Where appropriate, processor 502 can include one or more arithmetic logic units (ALUs); be a multi-core processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 can load instructions from storage 506 or another source (such as, for example, another computer system 500) to memory 504. Processor 502 can then load the instructions from memory 504 to an internal register or internal cache. To execute the instructions, processor 502 can retrieve the instructions from the internal register or internal cache and decode them. During or after execution of the instructions, processor 502 can write one or more results (which can be intermediate or final results) to the internal register or internal cache. Processor 502 can then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which can each include an address bus and a data bus) can couple processor 502 to memory 504. Bus 512 can include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM can be volatile memory, where appropriate. Where appropriate, this RAM can be dynamic RAM (DRAM) or static RAM (SRAM). Moreover, where appropriate, this RAM can be single-ported or multi-ported RAM. This disclosure contemplates any suitable RAM. Memory 504 can include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 can include a hard disk drive (HDD), a floppy disk drive, flash memory, an optical disc, a magneto-optical disc, magnetic tape, or a Universal Serial Bus (USB) drive or a combination of two or more of these. Storage 506 can include removable or non-removable (or fixed) media, where appropriate. Storage 506 can be internal or external to computer system 500, where appropriate. In particular embodiments, storage 506 is non-volatile, solid-state memory. In particular embodiments, storage 506 includes read-only memory (ROM). Where appropriate, this ROM can be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 can include one or more storage control units facilitating communication between processor 502 and storage 506, where appropriate. Where appropriate, storage 506 can include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 can include one or more of these I/O devices, where appropriate. One or more of these I/O devices can enable communication between a person and computer system 500. As an example and not by way of limitation, an I/O device can include a keyboard, keypad, microphone, monitor, mouse, printer, scanner, speaker, still camera, stylus, tablet, touch screen, trackball, video camera, another suitable I/O device or a combination of two or more of these. An I/O device can include one or more sensors. This disclosure contemplates any suitable I/O devices and any suitable I/O interfaces 508 for them. Where appropriate, I/O interface 508 can include one or more device or software drivers enabling processor 502 to drive one or more of these I/O devices. I/O interface 508 can include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 can include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 can communicate with an ad hoc network, a personal area network (PAN), a local area network (LAN), a wide area network (WAN), a metropolitan area network (MAN), or one or more portions of the Internet or a combination of two or more of these. One or more portions of one or more of these networks can be wired or wireless. As an example, computer system 500 can communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 can include any suitable communication interface 510 for any of these networks, where appropriate. Communication interface 510 can include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 can include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 can include one or more buses 512, where appropriate. Although this disclosure describes and illustrates a particular bus, this disclosure contemplates any suitable bus or interconnect.

Herein, a computer-readable non-transitory storage medium or media can include one or more semiconductor-based or other integrated circuits (ICs) (such, as for example, field-programmable gate arrays (FPGAs) or application-specific Ics (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium can be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

### EXEMPLARY EMBODIMENTS

In certain embodiments, the present disclosure is directed to methods comprising, by one or more computing systems: accessing a chromatographic time-series composite signal comprising a plurality of signal distributions, wherein each signal distribution corresponds to a chemical constituent, wherein two or more of the plurality of signal distributions are convoluted, wherein the chromatographic time-series composite signal is associated with a two-dimensional (2D) array, wherein a first dimension of the 2D array comprises a plurality of indexes and a second dimension of the 2D array comprises a plurality of response values corresponding to the plurality of indexes, respectively, and wherein each signal distribution is a gaussian distribution or an exponentially modified gaussian distribution; selecting a plurality of candidate index-response pairs from the 2D array, wherein each candidate index-response pair comprises an index from the plurality of indexes and its corresponding response value from the plurality of response values; selecting a time range for converting the chromatographic time-series composite signal into a one-dimensional (1D) array; removing a baseline drift associated with the chromatograph time-series composite signal; determining one or more binning parameters associated with a plurality of virtual bins used for converting the chromatographic time-series composite signal into the 1D array, wherein the one or more binning parameters comprises one or more of a number of the plurality of virtual bins determined based on a signal distribution of the chromatograph time-series composite signal, a location for each virtual bin determined based on the number of the virtual bins, a reference height for each virtual bin that is proportional to a sum signal in a range associated with that virtual bin, or a width for each virtual bin determined based on the number of the virtual bins; generating a scaled response value for the response value of each of the plurality of index-response pairs by multiplying the response value with a scaling factor; converting the chromatographic time-series composite signal into the 1D array, wherein the converting comprises: for each of the plurality of candidate index-response pairs, identifying a corresponding virtual bin from the plurality of virtual bins for the candidate index-response pair, wherein the identified virtual bin is associated with an index-range, generating an array-segment comprising one or more array-elements, wherein a number of the one or more array-elements is determined based on the scaled response value of the candidate index-response pair, and wherein the one or more array-elements are generated by unpacking the candidate index-response pair based on array deconstruction, wherein element-values of the one or more array-elements are determined based on the index-range, and distributing the one or more array-elements into the identified virtual bin based on a quasi-random low discrepancy sequence; and concatenating the plurality of array-segments corresponding to the plurality of candidate index-response pairs to generate the 1D array; processing the 1D array with a probability distribution realization algorithm to determine one or more of a mean, a standard deviation, a relative area for each of the plurality of signal distributions, an exponential decay component parameter, or any parameter defining each of the plurality of signal distributions, wherein the probability distribution realization algorithm is based on a Dirichlet process; determining a number of the plurality of signal distributions in the chromatographic time-series composite signal based on maximizing a likelihood function associated with the probability distribution realization algorithm; individually identifying each of the plurality of signal distributions based on one or more of the mean, the standard deviation, the relative area for each of the plurality of signal distributions, the exponential decay component parameter, or any parameter defining each of the plurality of signal distributions; and correlating each identified signal distribution with a chemical constituent.

In certain embodiments, the present disclosure is directed to methods comprising, by one or more computing systems: accessing a chromatographic time-series composite signal comprising a plurality of signal distributions, wherein the chromatographic time-series composite signal is associated with a two-dimensional (2D) array, wherein a first dimension of the 2D array comprises a plurality of indexes and a second dimension of the 2D array comprises a plurality of response values corresponding to the plurality of indexes, respectively; selecting a plurality of candidate index-response pairs from the 2D array; converting the chromatographic time-series composite signal into a one-dimensional (1D) array, wherein the converting comprises: for each of the plurality of candidate index-response pairs, generating an array-segment comprising one or more array-elements, wherein a number of the one or more array-elements is determined based on the response value of the candidate index-response pair, and wherein the one or more array-elements are generated by unpacking the candidate index-response pair based on array deconstruction; concatenating the plurality of array-segments corresponding to the plurality of candidate index-response pairs to generate the 1D array; processing the 1D array with a probability distribution realization algorithm to determine one or more of a mean, a standard deviation, a relative area for each of the plurality of signal distributions, an exponential decay component parameter, or any parameter defining each of the plurality of signal distributions; individually identifying each of the plurality of signal distributions based on one or more of the mean, the standard deviation, the relative area for each of the plurality of signal distributions, the exponential decay component parameter, or any parameter defining each of the plurality of signal distributions; and correlating each identified signal distribution with a chemical constituent.

In certain embodiments of the methods described above, two or more of the plurality of signal distributions are convoluted.

In certain embodiments of the methods described above, the method further comprises selecting a time range for converting the chromatographic time-series composite signal into the 1D array.

In certain embodiments of the methods described above, the method further comprises removing a baseline drift associated with the chromatograph time-series composite signal.

In certain embodiments of the methods described above in (B), the method further comprises: determining one or more binning parameters associated with a plurality of virtual bins used for converting the chromatographic time-series composite signal into the 1D array, wherein the one or more binning parameters comprises one or more of: a number of the plurality of virtual bins determined based on a signal distribution of the chromatograph time-series composite signal; a location for each virtual bin determined based on the number of the virtual bins; a reference height for each virtual bin that is proportional to a sum signal in a range associated with that virtual bin; or a width for each virtual bin determined based on the number of the virtual bins.

In certain embodiments of the methods described above, the method further comprises generating a scaled response value for the response value of each of the plurality of index-response pairs of the 2D array by multiplying the response value with a scaling factor.

In certain embodiments of the methods described above, generating the array-segment for each of the plurality of candidate index-response pairs comprises: identifying a corresponding virtual bin from the plurality of virtual bins for the candidate index-response pair, wherein the identified virtual bin is associated with an index-range; randomly generating the one or more array-elements comprised in the array-segment, wherein element-values of the one or more array-elements are determined based on the index-range, and wherein a number of the one or more array-elements is equivalent to the scaled response value associated with the candidate index-response pair; and distributing the one or more generated array-elements into the identified virtual bin based on a quasi-random low discrepancy sequence.

In certain embodiments of the methods described above, the chromatograph time-series composite signal comprises a mixture model comprising a plurality of probability distributions, each probability distribution corresponding to a chemical constituent.

In certain embodiments of the methods described above, the mixture model comprises a gaussian mixture model, and wherein each of the probability distributions comprises a gaussian distribution or an exponentially modified gaussian distribution.

In certain embodiments of the methods described above, the probability distribution realization algorithm is based on a Dirichlet process.

In certain embodiments of the methods described above, the method further comprises determining a number of the plurality of signal distributions in the chromatographic time-series composite signal based on maximizing a likelihood function associated with the probability distribution realization algorithm.

In certain embodiments of the methods described above, where a number of the plurality of chemical constituents is unknown, the method further comprises determining the number of the plurality of chemical constituents based on the determined number of signal distributions.

In certain embodiments of the methods described above, the method further comprises identifying a number of spectral data points assigned to each of a plurality of signal distributions associated with the plurality of chemical constituents relative to an ensemble of spectral data points; and determining the relative area associated with each of the plurality of signal distributions based on the identified number of spectral data points assigned to that signal distribution.

In certain embodiments, the present disclosure is directed to methods comprising, by one or more computing systems: generating a one-dimensional (1D) array comprising array-elements, wherein each array-element embodies a plurality of signal distributions corresponding to a plurality of chemical constituents; processing the 1D array with a probability distribution realization algorithm to determine one or more of a mean, a standard deviation, a relative area for each of the plurality of signal distributions, an exponential decay component parameter, or any parameter defining each of the plurality of signal distributions; and identifying at least one signal distribution that corresponds to a chemical constituent from the plurality of signal distributions corresponding to the plurality of chemical constituents.

In certain embodiments of the methods described above, the 1D array is derived from a two-dimensional (2D) array, wherein a first dimension of the 2D array comprises a plurality of indexes and a second dimension of the 2D array comprises a plurality of response values corresponding to the plurality of indexes, respectively.

In certain embodiments of the methods described above, an element-value of each array-element in the 1D array is derived from one of the plurality of response values in the 2D array.

In certain embodiments of the methods described above, the method further comprises: selecting a plurality of candidate index-response pairs from the 2D array; and generating a scaled response value for the response value of each of the plurality of index-response pairs of the 2D array by multiplying the response value with a scaling factor; wherein generating the 1D array comprises: for each of the plurality of candidate index-response pairs, generating an array-segment comprising one or more array-elements, wherein a number of the one or more array-elements is determined based on the response value of the candidate index-response pair, and wherein the one or more array-elements are generated by unpacking the candidate index-response pair based on array deconstruction; and concatenating the plurality of array-segments corresponding to the plurality of candidate index-response pairs to generate the 1D array.

In certain embodiments of the methods described above, generating the array-segment for each of the plurality of candidate index-response pairs comprises: determining a virtual bin for the candidate index-response pair, wherein the determined virtual bin is associated with an index-range; randomly generating the one or more array-elements comprised in the array-segment, wherein element-values of the one or more array-elements are determined based on the index-range, and wherein a number of the one or more array-elements is equivalent to the scaled response value associated with the candidate index-response pair; and distributing the one or more generated array-elements into the determined virtual bin based on a quasi-random low discrepancy sequence.

In certain embodiments of the methods described above, the 2D array is associated with a chromatographic time-series composite signal comprising the plurality of signal distributions, wherein each signal distribution corresponds to a chemical constituent, and wherein two or more of the plurality of signal distributions are convoluted.

In certain embodiments of the methods described above, two or more of the plurality of signal distributions are convoluted.

In certain embodiments of the methods described above, each of the probability distributions comprises a gaussian distribution or an exponentially modified gaussian distribution.

In certain embodiments of the methods described above, the probability distribution realization algorithm is based on a Dirichlet process.

In certain embodiments of the methods described above, the method further comprises determining a number of the plurality of signal distributions based on maximizing a likelihood function associated with the probability distribution realization algorithm.

In certain embodiments of the methods described above, when a number of the plurality of chemical constituents is unknown, the method further comprises determining the number of the plurality of chemical constituents based on the determined number of signal distributions.

In certain embodiments of the methods described above, the method further comprises identifying a number of spectral data points assigned to the at least one signal distribution relative to an ensemble of spectral data points; and determining a relative area associated with the at least one signal distribution based on the identified number of spectral data points.

In certain embodiments, the present disclosure is directed to one or more computer-readable non-transitory storage media embodying software that is operable when executed to: access a chromatographic time-series composite signal comprising a plurality of signal distributions, wherein the chromatographic time-series composite signal is associated with a two-dimensional (2D) array, wherein a first dimension of the 2D array comprises a plurality of indexes and a second dimension of the 2D array comprises a plurality of response values corresponding to the plurality of indexes, respectively; select a plurality of candidate index-response pairs from the 2D array; convert the chromatographic time-series composite signal into a one-dimensional (1D) array, wherein the converting comprises: for each of the plurality of candidate index-response pairs, generating an array-segment comprising one or more array-elements, wherein a number of the one or more array-elements is determined based on the response value of the candidate index-response pair, and wherein the one or more array-elements are generated by unpacking the candidate index-response pair based on array deconstruction; concatenating the plurality of array-segments corresponding to the plurality of candidate index-response pairs to generate the 1D array; process the 1D array with a probability distribution realization algorithm to determine one or more of a mean, a standard deviation, a relative area for each of the plurality of signal distributions, an exponential decay component parameter, or any parameter defining each of the plurality of signal distributions; individually identify each of the plurality of signal distributions based on one or more of the mean, the standard deviation, the relative area for each of the plurality of signal distributions, the exponential decay component parameter, or any parameter defining each of the plurality of signal distributions; and correlate each identified signal distribution with a chemical constituent.

In certain embodiments of the media described above, two or more of the plurality of signal distributions are convoluted.

In certain embodiments of the media described above, the software is further operable when executed to select a time range for converting the chromatographic time-series composite signal into the 1D array.

In certain embodiments of the media described above, the software is further operable when executed to remove a baseline drift associated with the chromatograph time-series composite signal.

In certain embodiments of the media described above, the software is further operable when executed to: determine one or more binning parameters associated with a plurality of virtual bins used for converting the chromatographic time-series composite signal into the 1D array, wherein the one or more binning parameters comprises one or more of: a number of the plurality of virtual bins determined based on a signal distribution of the chromatograph time-series composite signal; a location for each virtual bin determined based on the number of the virtual bins; a reference height for each virtual bin that is proportional to a sum signal in a range associated with that virtual bin; or a width for each virtual bin determined based on the number of the virtual bins.

In certain embodiments of the media described above, the software is further operable when executed to: generate a scaled response value for the response value of each of the plurality of index-response pairs of the 2D array by multiplying the response value with a scaling factor.

In certain embodiments of the media described above, generating the array-segment for each of the plurality of candidate index-response pairs comprises: identifying a corresponding virtual bin from the plurality of virtual bins for the candidate index-response pair, wherein the identified virtual bin is associated with an index-range; randomly generating the one or more array-elements comprised in the array-segment, wherein element-values of the one or more array-elements are determined based on the index-range, and wherein a number of the one or more array-elements is equivalent to the scaled response value associated with the candidate index-response pair; and distributing the one or more generated array-elements into the identified virtual bin based on a quasi-random low discrepancy sequence.

In certain embodiments of the media described above, the chromatograph time-series composite signal comprises a mixture model comprising a plurality of probability distributions, each probability distribution corresponding to a chemical constituent.

In certain embodiments of the media described above, the mixture model comprises a gaussian mixture model, and wherein each of the probability distributions comprises a gaussian distribution or an exponentially modified gaussian distribution.

In certain embodiments of the media described above, the probability distribution realization algorithm is based on a Dirichlet process.

In certain embodiments of the media described above, the software is further operable when executed to: determine a number of the plurality of signal distributions in the chromatographic time-series composite signal based on maximizing a likelihood function associated with the probability distribution realization algorithm.

In certain embodiments of the media described above, when a number of the plurality of chemical constituents is unknown, the software is further operable when executed to determine the number of the plurality of chemical constituents based on the determined number of signal distributions.

In certain embodiments of the media described above, the software is further operable when executed to: identify a number of spectral data points assigned to each of a plurality of signal distributions associated with the plurality of chemical constituents relative to an ensemble of spectral data points; and determine the relative area associated with each of the plurality of signal distributions based on the identified number of spectral data points assigned to that signal distribution.

In certain embodiments, the present disclosure is directed to systems comprising: one or more processors; and a non-transitory memory coupled to the processors comprising instructions executable by the processors, the processors operable when executing the instructions to: access a chromatographic time-series composite signal comprising a plurality of signal distributions, wherein the chromatographic time-series composite signal is associated with a two-dimensional (2D) array, wherein a first dimension of the 2D array comprises a plurality of indexes and a second dimension of the 2D array comprises a plurality of response values corresponding to the plurality of indexes, respectively; select a plurality of candidate index-response pairs from the 2D array; convert the chromatographic time-series composite signal into a one-dimensional (1D) array, wherein the converting comprises: for each of the plurality of candidate index-response pairs, generating an array-segment comprising one or more array-elements, wherein a number of the one or more array-elements is determined based on the response value of the candidate index-response pair, and wherein the one or more array-elements are generated by unpacking the candidate index-response pair based on array deconstruction; concatenating the plurality of array-segments corresponding to the plurality of candidate index-response pairs to generate the 1D array; process the 1D array with a probability distribution realization algorithm to determine one or more of a mean, a standard deviation, a relative area for each of the plurality of signal distributions, an exponential decay component parameter, or any parameter defining each of the plurality of signal distributions; individually identify each of the plurality of signal distributions based on one or more of the mean, the standard deviation, the relative area for each of the plurality of signal distributions, the exponential decay component parameter, or any parameter defining each of the plurality of signal distributions; and correlate each identified signal distribution with a chemical constituent.

In certain embodiments of the systems described above, two or more of the plurality of signal distributions are convoluted.

In certain embodiments of the systems described above, the processors are further operable when executing the instructions to: select a time range for converting the chromatographic time-series composite signal into the 1D array.

In certain embodiments of the systems described above, the processors are further operable when executing the instructions to: remove a baseline drift associated with the chromatograph time-series composite signal.

In certain embodiments of the systems described above, the processors are further operable when executing the instructions to: determine one or more binning parameters associated with a plurality of virtual bins used for converting the chromatographic time-series composite signal into the 1D array, wherein the one or more binning parameters comprises one or more of: a number of the plurality of virtual bins determined based on a signal distribution of the chromatograph time-series composite signal; a location for each virtual bin determined based on the number of the virtual bins; a reference height for each virtual bin that is proportional to a sum signal in a range associated with that virtual bin; or a width for each virtual bin determined based on the number of the virtual bins.

In certain embodiments of the systems described above, the processors are further operable when executing the instructions to: generate a scaled response value for the response value of each of the plurality of index-response pairs of the 2D array by multiplying the response value with a scaling factor.

In certain embodiments of the systems described above, generating the array-segment for each of the plurality of candidate index-response pairs comprises: identifying a corresponding virtual bin from the plurality of virtual bins for the candidate index-response pair, wherein the identified virtual bin is associated with an index-range; randomly generating the one or more array-elements comprised in the array-segment, wherein element-values of the one or more array-elements are determined based on the index-range, and wherein a number of the one or more array-elements is equivalent to the scaled response value associated with the candidate index-response pair; and distributing the one or more generated array-elements into the identified virtual bin based on a quasi-random low discrepancy sequence.

In certain embodiments of the systems described above, the chromatograph time-series composite signal comprises a mixture model comprising a plurality of probability distributions, each probability distribution corresponding to a chemical constituent.

In certain embodiments of the systems described above, the mixture model comprises a gaussian mixture model, and wherein each of the probability distributions comprises a gaussian distribution or an exponentially modified gaussian distribution.

In certain embodiments of the systems described above, the probability distribution realization algorithm is based on a Dirichlet process.

In certain embodiments of the systems described above, the processors are further operable when executing the instructions to determine a number of the plurality of signal distributions in the chromatographic time-series composite signal based on maximizing a likelihood function associated with the probability distribution realization algorithm.

In certain embodiments of the systems described above, when a number of the plurality of chemical constituents is unknown, the processors are further operable when executing the instructions to determine the number of the plurality of chemical constituents based on the determined number of signal distributions.

In certain embodiments of the systems described above, the processors are further operable when executing the instructions to: identify a number of spectral data points assigned to each of a plurality of signal distributions associated with the plurality of chemical constituents relative to an ensemble of spectral data points; and determine the relative area associated with each of the plurality of signal distributions based on the identified number of spectral data points assigned to that signal distribution.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein.

Additionally, although this disclosure describes or illustrates particular embodiments as providing particular advantages, particular embodiments can provide none, some, or all of these advantages.

## Claims

1. A method comprising, by one or more computing systems:
accessing a chromatographic time-series composite signal comprising a plurality of signal distributions,
wherein each signal distribution corresponds to a chemical constituent,
wherein two or more of the plurality of signal distributions are convoluted,
wherein the chromatographic time-series composite signal is associated with a two-dimensional (2D) array, wherein a first dimension of the 2D array comprises a plurality of indexes and a second dimension of the 2D array comprises a plurality of response values corresponding to the plurality of indexes, respectively, and
wherein each signal distribution is a gaussian distribution or an exponentially modified gaussian distribution;
selecting a plurality of candidate index-response pairs from the 2D array, wherein each candidate index-response pair comprises an index from the plurality of indexes and its corresponding response value from the plurality of response values;
selecting a time range for converting the chromatographic time-series composite signal into a one-dimensional (1D) array;
removing a baseline drift associated with the chromatograph time-series composite signal;
determining one or more binning parameters associated with a plurality of virtual bins used for converting the chromatographic time-series composite signal into the 1D array, wherein the one or more binning parameters comprises one or more of a number of the plurality of virtual bins determined based on a signal distribution of the chromatograph time-series composite signal, a location for each virtual bin determined based on the number of the virtual bins, a reference height for each virtual bin that is proportional to a sum signal in a range associated with that virtual bin, or a width for each virtual bin determined based on the number of the virtual bins;
generating a scaled response value for the response value of each of the plurality of index-response pairs by multiplying the response value with a scaling factor;
converting the chromatographic time-series composite signal into the 1D array,
wherein the converting comprises:
for each of the plurality of candidate index-response pairs,
identifying a corresponding virtual bin from the plurality of virtual bins for the candidate index-response pair, wherein the identified virtual bin is associated with an index-range,
generating an array-segment comprising one or more array-elements, wherein a number of the one or more array-elements is determined based on the scaled response value of the candidate index-response pair, and wherein the one or more array-elements are generated by unpacking the candidate index-response pair based on array deconstruction, wherein element-values of the one or more array-elements are determined based on the index-range, and
distributing the one or more array-elements into the identified virtual bin based on a quasi-random low discrepancy sequence; and
concatenating the plurality of array-segments corresponding to the plurality of candidate index-response pairs to generate the 1D array;
processing the 1D array with a probability distribution realization algorithm to determine one or more of a mean, a standard deviation, a relative area for each of the plurality of signal distributions, an exponential decay component parameter, or any parameter defining each of the plurality of signal distributions, wherein the probability distribution realization algorithm is based on a Dirichlet process;
determining a number of the plurality of signal distributions in the chromatographic time-series composite signal based on maximizing a likelihood function associated with the probability distribution realization algorithm;
individually identifying each of the plurality of signal distributions based on one or more of the mean, the standard deviation, the relative area for each of the plurality of signal distributions, the exponential decay component parameter, or any parameter defining each of the plurality of signal distributions; and
correlating each identified signal distribution with a chemical constituent.

2. A method comprising, by one or more computing systems:
accessing a chromatographic time-series composite signal comprising a plurality of signal distributions, wherein the chromatographic time-series composite signal is associated with a two-dimensional (2D) array, wherein a first dimension of the 2D array comprises a plurality of indexes and a second dimension of the 2D array comprises a plurality of response values corresponding to the plurality of indexes, respectively;
selecting a plurality of candidate index-response pairs from the 2D array;
converting the chromatographic time-series composite signal into a one-dimensional (1D) array, wherein the converting comprises:
for each of the plurality of candidate index-response pairs, generating an array-segment comprising one or more array-elements, wherein a number of the one or more array-elements is determined based on the response value of the candidate index-response pair, and wherein the one or more array-elements are generated by unpacking the candidate index-response pair based on array deconstruction;
concatenating the plurality of array-segments corresponding to the plurality of candidate index-response pairs to generate the 1D array;
processing the 1D array with a probability distribution realization algorithm to determine one or more of a mean, a standard deviation, a relative area for each of the plurality of signal distributions, an exponential decay component parameter, or any parameter defining each of the plurality of signal distributions;
individually identifying each of the plurality of signal distributions based on one or more of the mean, the standard deviation, the relative area for each of the plurality of signal distributions, the exponential decay component parameter, or any parameter defining each of the plurality of signal distributions; and
correlating each identified signal distribution with a chemical constituent.

3. The method of Claim 2, wherein two or more of the plurality of signal distributions are convoluted.

4. The method of Claim 2, further comprising:
selecting a time range for converting the chromatographic time-series composite signal into the 1D array.

5. The method of Claim 2, further comprising:
removing a baseline drift associated with the chromatograph time-series composite signal.

6. The method of Claim 2, further comprising:
determining one or more binning parameters associated with a plurality of virtual bins used for converting the chromatographic time-series composite signal into the 1D array, wherein the one or more binning parameters comprises one or more of:
a number of the plurality of virtual bins determined based on a signal distribution of the chromatograph time-series composite signal;
a location for each virtual bin determined based on the number of the virtual bins;
a reference height for each virtual bin that is proportional to a sum signal in a range associated with that virtual bin; or
a width for each virtual bin determined based on the number of the virtual bins.

7. The method of Claim 6, further comprising:
generating a scaled response value for the response value of each of the plurality of index-response pairs of the 2D array by multiplying the response value with a scaling factor.

8. The method of Claim 7, wherein generating the array-segment for each of the plurality of candidate index-response pairs comprises:
identifying a corresponding virtual bin from the plurality of virtual bins for the candidate index-response pair, wherein the identified virtual bin is associated with an index-range;
randomly generating the one or more array-elements comprised in the array-segment, wherein element-values of the one or more array-elements are determined based on the index-range, and wherein a number of the one or more array-elements is equivalent to the scaled response value associated with the candidate index-response pair; and
distributing the one or more generated array-elements into the identified virtual bin based on a quasi-random low discrepancy sequence.

9. The method of Claim 2, where the chromatograph time-series composite signal comprises a mixture model comprising a plurality of probability distributions, each probability distribution corresponding to a chemical constituent.

10. The method of Claim 9, where the mixture model comprises a gaussian mixture model, and wherein each of the probability distributions comprises a gaussian distribution or an exponentially modified gaussian distribution.

11. The method of Claim 10, wherein the probability distribution realization algorithm is based on a Dirichlet process.

12. The method of Claim 2, further comprising:
determining a number of the plurality of signal distributions in the chromatographic time-series composite signal based on maximizing a likelihood function associated with the probability distribution realization algorithm.

13. The method of Claim 12, wherein a number of the plurality of chemical constituents is unknown, wherein the method further comprises:
determining the number of the plurality of chemical constituents based on the determined number of signal distributions.

14. The method of Claim 2, further comprising:
identifying a number of spectral data points assigned to each of a plurality of signal distributions associated with the plurality of chemical constituents relative to an ensemble of spectral data points; and
determining the relative area associated with each of the plurality of signal distributions based on the identified number of spectral data points assigned to that signal distribution.

## Patentansprüche

1. Verfahren, umfassend, durch ein oder mehrere Computersysteme:
Zugreifen auf ein zusammengesetztes chromatographisches Zeitreihensignal, das eine Vielzahl von Signalverteilungen umfasst,
wobei jede Signalverteilung einem chemischen Bestandteil entspricht,
wobei zwei oder mehr der Vielzahl von Signalverteilungen gefaltet sind,
wobei das zusammengesetzte chromatographische Zeitreihensignal einem zweidimensionalen (2D) Array zugeordnet ist, wobei eine erste Dimension des 2D-Arrays eine Vielzahl von Indizes umfasst und eine zweite Dimension des 2D-Arrays eine Vielzahl von Antwortwerten umfasst, die jeweils der Vielzahl von Indizes entsprechen, und
wobei jede Signalverteilung eine Gaußsche Verteilung oder eine exponentiell modifizierte Gaußsche Verteilung ist;
Auswählen einer Vielzahl von Kandidaten-Index-Antwort-Paaren aus dem 2D-Array, wobei jedes Kandidaten-Index-Antwort-Paar einen Index aus der Vielzahl von Indizes und seinen entsprechenden Antwortwert aus der Vielzahl von Antwortwerten umfasst;
Auswählen eines Zeitbereichs zum Umwandeln des zusammengesetzten chromatographischen Zeitreihensignals in ein eindimensionales (1D) Array;
Entfernen einer Basisliniendrift, die dem zusammengesetzten chromatographischen Zeitreihensignal zugeordnet ist;
Bestimmen eines oder mehrerer Binning-Parameter, die einer Vielzahl von virtuellen Bins zugeordnet sind, die zum Umwandeln des zusammengesetzten chromatographischen Zeitreihensignals in das 1D-Array verwendet werden, wobei der eine oder die mehreren Binning-Parameter eines oder mehrere aus einer Anzahl der Vielzahl von virtuellen Bins, die basierend auf einer Signalverteilung des zusammengesetzten chromatographischen Zeitreihensignals bestimmt werden, einer Position für jedes virtuelle Bin, die basierend auf der Anzahl der virtuellen Bins bestimmt wird, einer Referenzhöhe für jedes virtuelle Bin, die proportional zu einem Summensignal in einem Bereich ist, der diesem virtuellen Bin zugeordnet ist, oder einer Breite für jedes virtuelle Bin, die basierend auf der Anzahl der virtuellen Bins bestimmt wird, umfassen;
Erzeugen eines skalierten Antwortwerts für den Antwortwert jedes der Vielzahl von Index-Antwort-Paaren durch Multiplizieren des Antwortwerts mit einem Skalierungsfaktor;
Umwandeln des zusammengesetzten chromatographischen Zeitreihensignals in das 1D-Array, wobei das Umwandeln umfasst:
für jedes der Vielzahl von Kandidaten-Index-Antwort-Paaren,
Identifizieren eines entsprechenden virtuellen Bins aus der Vielzahl von virtuellen Bins für das Kandidaten-Index-Antwort-Paar, wobei das identifizierte virtuelle Bin einem Indexbereich zugeordnet ist,
Erzeugen eines Array-Segments, das ein oder mehrere Array-Elemente umfasst, wobei eine Anzahl des einen oder der mehreren Array-Elemente basierend auf dem skalierten Antwortwert des Kandidaten-Index-Antwort-Paars bestimmt wird, und wobei das eine oder die mehreren Array-Elemente durch Entpacken des Kandidaten-Index-Antwort-Paars basierend auf einer Array-Dekonstruktion erzeugt werden, wobei Elementwerte des einen oder der mehreren Array-Elemente basierend auf dem Indexbereich bestimmt werden, und
Verteilen des einen oder der mehreren Array-Elemente in das identifizierte virtuelle Bin basierend auf einer quasi-zufälligen Sequenz mit geringer Diskrepanz; und
Verketten der Vielzahl von Array-Segmenten, die der Vielzahl von Kandidaten-Index-Antwort-Paaren entsprechen, um das 1D-Array zu erzeugen;
Verarbeiten des 1D-Arrays mit einem Wahrscheinlichkeitsverteilungsrealisierungsalgorithmus, um eines oder mehrere aus einem Mittelwert, einer Standardabweichung, einer relativen Fläche für jede der Vielzahl von Signalverteilungen, einem exponentiellen Abklingkomponentenparameter oder einem beliebigen Parameter, der jede der Vielzahl von Signalverteilungen definiert, zu bestimmen, wobei der Wahrscheinlichkeitsverteilungsrealisierungsalgorithmus auf einem Dirichlet-Prozess basiert;
Bestimmen einer Anzahl der Vielzahl von Signalverteilungen in dem zusammengesetzten chromatographischen Zeitreihensignal basierend auf dem Maximieren einer Wahrscheinlichkeitsfunktion, die dem Wahrscheinlichkeitsverteilungsrealisierungsalgorithmus zugeordnet ist;
individuelles Identifizieren jeder der Vielzahl von Signalverteilungen basierend auf einem oder mehreren aus dem Mittelwert, der Standardabweichung, der relativen Fläche für jede der Vielzahl von Signalverteilungen, dem exponentiellen Abklingkomponentenparameter oder einem beliebigen Parameter, der jede der Vielzahl von Signalverteilungen definiert; und
Korrelieren jeder identifizierten Signalverteilung mit einem chemischen Bestandteil.

2. Verfahren, umfassend, durch ein oder mehrere Computersysteme:
Zugreifen auf ein zusammengesetztes chromatographisches Zeitreihensignal, das eine Vielzahl von Signalverteilungen umfasst, wobei das zusammengesetzte chromatographische Zeitreihensignal einem zweidimensionalen (2D) Array zugeordnet ist, wobei eine erste Dimension des 2D-Arrays eine Vielzahl von Indizes umfasst und eine zweite Dimension des 2D-Arrays eine Vielzahl von Antwortwerten umfasst, die jeweils der Vielzahl von Indizes entsprechen;
Auswählen einer Vielzahl von Kandidaten-Index-Antwort-Paaren aus dem 2D-Array;
Umwandeln des zusammengesetzten chromatographischen Zeitreihensignals in ein eindimensionales (1D) Array, wobei das Umwandeln umfasst:
für jedes der Vielzahl von Kandidaten-Index-Antwort-Paaren, Erzeugen eines Array-Segments, das ein oder mehrere Array-Elemente umfasst, wobei eine Anzahl des einen oder der mehreren Array-Elemente basierend auf dem Antwortwert des Kandidaten-Index-Antwort-Paars bestimmt wird, und wobei das eine oder die mehreren Array-Elemente durch Entpacken des Kandidaten-Index-Antwort-Paars basierend auf einer Array-Dekonstruktion erzeugt werden;
Verketten der Vielzahl von Array-Segmenten, die der Vielzahl von Kandidaten-Index-Antwort-Paaren entsprechen, um das 1D-Array zu erzeugen;
Verarbeiten des 1D-Arrays mit einem Wahrscheinlichkeitsverteilungsrealisierungsalgorithmus, um eines oder mehrere aus einem Mittelwert, einer Standardabweichung, einer relativen Fläche für jede der Vielzahl von Signalverteilungen, einem exponentiellen Abklingkomponentenparameter oder einem beliebigen Parameter, der jede der Vielzahl von Signalverteilungen definiert, zu bestimmen;
individuelles Identifizieren jeder der Vielzahl von Signalverteilungen basierend auf einem oder mehreren aus dem Mittelwert, der Standardabweichung, der relativen Fläche für jede der Vielzahl von Signalverteilungen, dem exponentiellen Abklingkomponentenparameter oder einem beliebigen Parameter, der jede der Vielzahl von Signalverteilungen definiert; und
Korrelieren jeder identifizierten Signalverteilung mit einem chemischen Bestandteil.

3. Verfahren nach Anspruch 2, wobei zwei oder mehr der Vielzahl von Signalverteilungen gefaltet sind.

4. Verfahren nach Anspruch 2, ferner umfassend:
Auswählen eines Zeitbereichs zum Umwandeln des zusammengesetzten chromatographischen Zeitreihensignals in das 1D-Array.

5. Verfahren nach Anspruch 2, ferner umfassend:
Entfernen einer Basisliniendrift, die dem zusammengesetzten chromatographischen Zeitreihensignal zugeordnet ist.

6. Verfahren nach Anspruch 2, ferner umfassend:
Bestimmen eines oder mehrerer Binning-Parameter, die einer Vielzahl von virtuellen Bins zugeordnet sind, die zum Umwandeln des zusammengesetzten chromatographischen Zeitreihensignals in das 1D-Array verwendet werden, wobei der eine oder die mehreren Binning-Parameter eines oder mehrere umfassen von:
einer Anzahl der Vielzahl von virtuellen Bins, die basierend auf einer Signalverteilung des zusammengesetzten chromatographischen Zeitreihensignals bestimmt werden;
einer Position für jedes virtuelle Bin, die basierend auf der Anzahl der virtuellen Bins bestimmt wird;
einer Referenzhöhe für jedes virtuelle Bin, die proportional zu einem Summensignal in einem Bereich ist, der diesem virtuellen Bin zugeordnet ist; oder
einer Breite für jedes virtuelle Bin, die basierend auf der Anzahl der virtuellen Bins bestimmt wird.

7. Verfahren nach Anspruch 6, ferner umfassend:
Erzeugen eines skalierten Antwortwerts für den Antwortwert jedes der Vielzahl von Index-Antwort-Paaren des 2D-Arrays durch Multiplizieren des Antwortwerts mit einem Skalierungsfaktor.

8. Verfahren nach Anspruch 7, wobei das Erzeugen des Array-Segments für jedes der Vielzahl von Kandidaten-Index-Antwort-Paaren umfasst:
Identifizieren eines entsprechenden virtuellen Bins aus der Vielzahl von virtuellen Bins für das Kandidaten-Index-Antwort-Paar, wobei das identifizierte virtuelle Bin einem Indexbereich zugeordnet ist;
zufälliges Erzeugen des einen oder der mehreren Array-Elemente, die in dem Array-Segment enthalten sind, wobei Elementwerte des einen oder der mehreren Array-Elemente basierend auf dem Indexbereich bestimmt werden, und wobei eine Anzahl des einen oder der mehreren Array-Elemente äquivalent zu dem skalierten Antwortwert ist, der dem Kandidaten-Index-Antwort-Paar zugeordnet ist; und
Verteilen des einen oder der mehreren erzeugten Array-Elemente in das identifizierte virtuelle Bin basierend auf einer quasi-zufälligen Sequenz mit geringer Diskrepanz.

9. Verfahren nach Anspruch 2, wobei das zusammengesetzte chromatographische Zeitreihensignal ein Mischmodell umfasst, das eine Vielzahl von Wahrscheinlichkeitsverteilungen umfasst, wobei jede Wahrscheinlichkeitsverteilung einem chemischen Bestandteil entspricht.

10. Verfahren nach Anspruch 9, wobei das Mischmodell ein Gaußsches Mischmodell umfasst, und wobei jede der Wahrscheinlichkeitsverteilungen eine Gaußsche Verteilung oder eine exponentiell modifizierte Gaußsche Verteilung umfasst.

11. Verfahren nach Anspruch 10, wobei der Wahrscheinlichkeitsverteilungsrealisierungsalgorithmus auf einem Dirichlet-Prozess basiert.

12. Verfahren nach Anspruch 2, ferner umfassend:
Bestimmen einer Anzahl der Vielzahl von Signalverteilungen in dem zusammengesetzten chromatographischen Zeitreihensignal basierend auf dem Maximieren einer Wahrscheinlichkeitsfunktion, die dem Wahrscheinlichkeitsverteilungsrealisierungsalgorithmus zugeordnet ist.

13. Verfahren nach Anspruch 12, wobei eine Anzahl der Vielzahl von chemischen Bestandteilen unbekannt ist, wobei das Verfahren ferner umfasst:
Bestimmen der Anzahl der Vielzahl von chemischen Bestandteilen basierend auf der bestimmten Anzahl von Signalverteilungen.

14. Verfahren nach Anspruch 2, ferner umfassend:
Identifizieren einer Anzahl von Spektraldatenpunkten, die jeder einer Vielzahl von Signalverteilungen zugeordnet sind, die der Vielzahl von chemischen Bestandteilen zugeordnet sind, relativ zu einem Ensemble von Spektraldatenpunkten; und
Bestimmen der relativen Fläche, die jeder der Vielzahl von Signalverteilungen zugeordnet ist, basierend auf der identifizierten Anzahl von Spektraldatenpunkten, die dieser Signalverteilung zugeordnet sind.

## Revendications

1. Procédé comprenant, par un ou plusieurs systèmes de calcul :
l'accès à un signal chromatographique composite en série chronologique comprenant une pluralité de distributions de signaux,
dans lequel chaque distribution de signal correspond à un constituant chimique,
dans lequel deux de la pluralité de distributions de signaux ou plus sont convoluées,
dans lequel le signal chromatographique composite en série chronologique est associé à un tableau bidimensionnel (2D), dans lequel une première dimension du tableau 2D comprend une pluralité d'indices et une seconde dimension du tableau 2D comprend une pluralité de valeurs de réponse correspondant à la pluralité d'indices, respectivement, et
dans lequel chaque distribution de signal est une distribution gaussienne ou une distribution gaussienne modifiée exponentiellement ;
la sélection d'une pluralité de paires indice-réponse candidates à partir du tableau 2D, chaque paire indice-réponse candidate comprenant un indice parmi la pluralité d'indices et sa valeur de réponse correspondante parmi la pluralité de valeurs de réponse ;
la sélection d'une plage chronologique pour convertir le signal chromatographique composite en série chronologique en un tableau unidimensionnel (1D) ;
la suppression d'une dérive de la ligne de base associée au signal chromatographique composite en série chronologique ;
la détermination d'un ou de plusieurs paramètres de compartimentage associés à une pluralité de compartiments virtuels utilisés pour convertir le signal chromatographique composite en série chronologique en tableau 1D, le ou les paramètres de compartimentage comprenant un ou plusieurs parmi un nombre de la pluralité de compartiments virtuels déterminé en se basant sur une distribution de signal du signal chromatographique composite en série chronologique, un emplacement pour chaque compartiment virtuel déterminé en se basant sur le nombre des compartiments virtuels, une hauteur de référence pour chaque compartiment virtuel qui est proportionnelle à un signal de somme dans une plage associée à ce compartiment virtuel ou une largeur pour chaque compartiment virtuel déterminée en se basant sur le nombre des compartiments virtuels ;
la génération d'une valeur de réponse mise à l'échelle pour la valeur de réponse de chacune de la pluralité de paires indice-réponse en multipliant la valeur de réponse par un facteur de mise à l'échelle ;
la conversion du signal chromatographique composite en série chronologique en tableau 1D, la conversion comprenant :
pour chacune de la pluralité de paires indice-réponse candidates,
l'identification d'un compartiment virtuel correspondant parmi la pluralité de compartiments virtuels pour la paire indice-réponse candidate, le compartiment virtuel identifié étant associé à une plage d'indices,
la génération d'un segment de tableau comprenant un ou plusieurs éléments de tableau, un nombre du ou des éléments de tableau étant déterminé en se basant sur la valeur de réponse mise à l'échelle de la paire indice-réponse candidate, et le ou les éléments de tableau étant générés en décompactant la paire indice-réponse candidate en se basant sur la déconstruction de tableau, les valeurs d'élément du ou des éléments de tableau étant déterminées en se basant sur la plage d'indices, et
la distribution du ou des éléments de tableau dans le compartiment virtuel identifié en se basant sur une séquence à discrépance faible quasi aléatoire ; et
la concaténation de la pluralité de segments de tableau correspondant à la pluralité de paires indice-réponse candidates pour générer le tableau 1D ;
le traitement du tableau 1D par un algorithme de réalisation de distribution de probabilité pour déterminer un ou plusieurs parmi une moyenne, un écart type, une aire relative pour chacune de la pluralité de distributions de signaux, un paramètre de composante de décroissance exponentielle, ou un quelconque paramètre définissant chacune de la pluralité de distributions de signaux, l'algorithme de réalisation de distribution de probabilité se basant sur un processus de Dirichlet ;
la détermination d'un nombre de la pluralité de distributions de signaux dans le signal chromatographique composite en série chronologique en se basant sur la maximisation d'une fonction de vraisemblance associée à l'algorithme de réalisation de distribution de probabilité ;
l'identification individuelle de chacune de la pluralité de distributions de signaux en se basant sur un ou plusieurs parmi la moyenne, l'écart type, l'aire relative pour chacune de la pluralité de distributions de signaux, le paramètre de composante de décroissance exponentielle, ou un quelconque paramètre définissant chacune de la pluralité de distributions de signaux ; et
la corrélation de chaque distribution de signal identifiée avec un constituant chimique.

2. Procédé comprenant, par un ou plusieurs systèmes de calcul :
l'accès à un signal chromatographique composite en série chronologique comprenant une pluralité de distributions de signaux, le signal chromatographique composite en série chronologique étant associé à un tableau bidimensionnel (2D), une première dimension du tableau 2D comprenant une pluralité d'indices et une seconde dimension du tableau 2D comprenant une pluralité de valeurs de réponse correspondant à la pluralité d'indices, respectivement ;
la sélection d'une pluralité de paires indice-réponse candidates à partir du tableau 2D ;
la conversion du signal chromatographique composite en série chronologique en un tableau unidimensionnel (1D), la conversion comprenant :
pour chacune de la pluralité de paires indice-réponse candidates, la génération d'un segment de tableau comprenant un ou plusieurs éléments de tableau, un nombre du ou des éléments de tableau étant déterminé en se basant sur la valeur de réponse de la paire indice-réponse candidate, et le ou les éléments de tableau étant générés en décompactant la paire indice-réponse candidate en se basant sur la déconstruction de tableau ;
la concaténation de la pluralité de segments de tableau correspondant à la pluralité de paires indice-réponse candidates pour générer le tableau 1D ;
le traitement du tableau 1D par un algorithme de réalisation de distribution de probabilité pour déterminer un ou plusieurs parmi une moyenne, un écart type, une aire relative pour chacune de la pluralité de distributions de signaux, un paramètre de composante de décroissance exponentielle, ou un quelconque paramètre définissant chacune de la pluralité de distributions de signaux ;
l'identification individuelle de chacune de la pluralité de distributions de signaux en se basant sur un ou plusieurs parmi la moyenne, l'écart type, l'aire relative pour chacune de la pluralité de distributions de signaux, le paramètre de composante de décroissance exponentielle, ou un quelconque paramètre définissant chacune de la pluralité de distributions de signaux ; et
la corrélation de chaque distribution de signal identifiée avec un constituant chimique.

3. Procédé selon la revendication 2, dans lequel deux de la pluralité de distributions de signaux ou plus sont convoluées.

4. Procédé selon la revendication 2, comprenant en outre :
la sélection d'une plage chronologique pour convertir le signal chromatographique composite en série chronologique en tableau 1D.

5. Procédé selon la revendication 2, comprenant en outre :
la suppression d'une dérive de la ligne de base associée au signal chromatographique composite en série chronologique.

6. Procédé selon la revendication 2, comprenant en outre :
la détermination d'un ou de plusieurs paramètres de compartimentage associés à une pluralité de compartiments virtuels utilisés pour convertir le signal chromatographique composite en série chronologique en tableau 1D, le ou les paramètres de compartimentage comprenant un ou plusieurs parmi :
un nombre de la pluralité de compartiments virtuels déterminé en se basant sur une distribution de signal du signal chromatographique composite en série chronologique ;
un emplacement pour chaque compartiment virtuel déterminé en se basant sur le nombre des compartiments virtuels ;
une hauteur de référence pour chaque compartiment virtuel qui est proportionnelle à un signal de somme dans une plage associée à ce compartiment virtuel ; ou
une largeur pour chaque compartiment virtuel déterminée en se basant sur le nombre des compartiments virtuels.

7. Procédé selon la revendication 6, comprenant en outre :
la génération d'une valeur de réponse mise à l'échelle pour la valeur de réponse de chacune de la pluralité de paires indice-réponse du tableau 2D en multipliant la valeur de réponse par un facteur de mise à l'échelle.

8. Procédé selon la revendication 7, dans lequel la génération du segment de tableau pour chacune de la pluralité de paires indice-réponse candidates comprend :
l'identification d'un compartiment virtuel correspondant parmi la pluralité de compartiments virtuels pour la paire indice-réponse candidate, le compartiment virtuel identifié étant associé à une plage d'indices ;
la génération aléatoire du ou des éléments de tableau compris dans le segment de tableau, les valeurs d'élément du ou des éléments de tableau étant déterminées en se basant sur la plage d'indices, et un nombre du ou des éléments de tableau étant équivalent à la valeur de réponse mise à l'échelle associée à la paire indice-réponse candidate ; et
la distribution du ou des éléments de tableau générés dans le compartiment virtuel identifié en se basant sur une séquence à discrépance faible quasi aléatoire.

9. Procédé selon la revendication 2, où le signal chromatographique composite en série chronologique comprend un modèle de mélange comprenant une pluralité de distributions de probabilité, chaque distribution de probabilité correspondant à un constituant chimique.

10. Procédé selon la revendication 9, où le modèle de mélange comprend un modèle de mélange gaussien, et dans lequel chacune des distributions de probabilité comprend une distribution gaussienne ou une distribution gaussienne modifiée exponentiellement.

11. Procédé selon la revendication 10, dans lequel l'algorithme de réalisation de distribution de probabilité est basé sur un processus de Dirichlet.

12. Procédé selon la revendication 2, comprenant en outre :
la détermination d'un nombre de la pluralité de distributions de signaux dans le signal chromatographique composite en série chronologique en se basant sur la maximisation d'une fonction de vraisemblance associée à l'algorithme de réalisation de distribution de probabilité.

13. Procédé selon la revendication 12, dans lequel un nombre de la pluralité de constituants chimiques est inconnu, dans lequel le procédé comprend en outre :
la détermination du nombre de la pluralité de constituants chimiques en se basant sur le nombre déterminé de distributions de signaux.

14. Procédé selon la revendication 2, comprenant en outre :
l'identification d'un nombre de points de données spectraux attribués à chacune d'une pluralité de distributions de signaux associée à la pluralité de constituants chimiques par rapport à un ensemble de points de données spectraux ; et
la détermination de l'aire relative associée à chacune de la pluralité de distributions de signaux en se basant sur le nombre identifié de points de données spectraux attribués à cette distribution de signal.
